# EUROPEAN PATENT APPLICATION

(11) **EP 2 637 109 A1**
(43) Date of publication of application: **11.09.2013**
(21) Application number: 11837417.2
(22) Date of filing: 25.02.2011
(51) Int. Cl.: G06F 17/25

(54) **METHOD FOR IMPROVING RENDERING SPEED OF BROWSER PAGE**

(30) Priority: 03.11.2010 CN 201010531112
(71) Applicant: ZTE Corporation, Shenzhen, Guangdong 518057 (CN)
(72) Inventor: FU, Shaoxian, Shenzhen Guangdong 518057 (CN)
(74) Representative: Pons Ariño, Angel
(86) International application number: PCT/CN2011/071299
(87) International publication number: WO 2012/058887

(57) **Abstract**

A method for improving rendering speed of a browser page is disclosed. The method includes: setting an initial state of the rendering operation; segmenting, from the beginning of the first character of a character string, the character string based on the character font, and calculating the character width of each segment by using the font library; obtaining the width of the character string by adding up the character width of each segment; displaying the character string based on the obtained width. A device for improving rendering speed of a browser page is also disclosed. The method and device reduce the number of times of calling the font library interface function to calculate the character width, thus reduce the resource overhead caused thereby and improve the efficiency of calculating the character width

## Description

### Field of the Invention

The present invention relates to the display technology of mobile terminals, and in particular to a method and device for improving page rendering speed of a browser.

### Background of the Invention

With the development of the mobile communication technology, more and more users use the browser in the mobile terminal to perform operations such as browsing the web page. The browser performance of the mobile terminal is generally related to three technical conditions: the first is the data loading speed, the second is the core processing speed, and the third is the page rendering speed. The prior two aspects belong to the category of the system, and are not considered in the present invention. The key point is the third aspect. Generally, the faster the rendering speed is, the faster the page displays, and the more smoothly the user views the page. The character display system is usually needed to display the characters in the page during the rendering process. And in a common character display system, the provided characters can be generally divided into two types.
1 The monospaced font: referring to the font of which the width of each character in the character string is the same, such as the Chinese font, Courier, Courier new etc. The types of the monospaced fonts are limited, and the change of the fonts is also relatively simple.
2 The unequal-width font: referring to the font of which the width of each character in the character string is unequal, such as the Roman type, the True Type etc. The types of the unequal-width fonts are relatively rich, and the display effect of the fonts relatively has higher aesthetic value.

When processing the character, the character display system usually displays the general monospaced fonts by using the equally-spaced fonts. The method for calculating the length of the character is also simple. The display length of the width of the character string can be calculated only by multiplying the width of a character by the number of the characters. However, for the general Western fonts, namely, the language in the form of combining letters into a word as a unit, in order to make the displayed form better comply with the usual writing habit, and make the displayed fonts have rich change effects, the unequally-spaced display mode is mostly adopted.

In the character string formed by the unequal-width fonts, or the mixed arrangement of the unequal-width fonts and monospaced fonts, the character width occupied by the character string cannot be obtained by accumulating the width of individual characters. Thus, the efficiency of calculating the width of the character string is very important when needing to obtain the width of the character string of the unequal-width characters or the width of the character string formed by the mixed arrangement. And, the efficiency of calculating is especially important when needing to frequently calculate the width of the character string. The general solution includes: for the given character string, scanning the character string from the beginning; respectively calling the interface function for calculating the width of the character string for each character of the character string to obtain the drawing width of the character; and finally, obtaining the total width of the character string by accumulating the calculated result. In this way, if the font width of the unequal-width fonts needs to be obtained, the font engine needs to be called to read the mathematical vector, and then a certain mathematical operation needs to be performed to obtain the character width. The character width interface function in the font library needs to be frequently called if the degree of mixture of the character string is high and there are a large amount of the characters, which can make the efficiency of calculating the character width very low.

### Summary of the Invention

The present invention is to provide a method and device for improving page rendering speed of a browser. This solution can improve the efficiency of calculating the character width by the browser.

In order to achieve the purpose, the technical solution of the present invention is realized in the following way.

The present invention provides a method for improving page rendering speed of a browser, including:
setting an initial state of a rendering operation;
segmenting a character string according to a font of characters from a first character of the character string, and calculating a character width of each segment by using a font library; and
obtaining the width of the character string by adding up the character width of the each segment, and displaying the character string according to the obtained width.

In the above, calculating the character width of the each segment by using the font library comprises: judging whether the font of the characters of the each segment is a monospaced font; if yes, obtaining the maximum width value of the font from the font library, and calculating the character width by performing accumulation according to the number of the characters; and if no, calling an interface function of the font in the font library to calculate the character width.

In the above, during the process of calling the interface function of the font library, the method further comprises: if no interface function of the font is found, creating the font in the font library, determining a value of the width of the character of the font, and storing the value of the width of the character of the font in the font library.

In the above, segmenting the character string according to the font of the characters comprises: sequentially reading each of the characters; if the font of the read character(s) is unchanged, the read character(s) belonging to a same segment; and if the font of the read character(s) is changed, the read character(s) belonging to a next segment, until a last character of the character string is read.

In the above, setting the initial state of the rendering operation comprises: initializing the font library and the interface function corresponding to each type of the font in the font library.

In the above, segmenting the character string according to the font of the characters, and calculating the character width of the each segment by using the font library comprises: after integrally and completely reading the character string, uniformly calculating the character width of the each segment according to the font of the characters of the each segment and classification of the font; or, during the process of reading the character string, calculating the character width of a former segment when the characters are changed.

The present invention also provides a device for improving page rendering speed of a browser, including: a font library and a character processing module, wherein
the font library is configured to accept a setting for an initial state of a rendering operation; and
the font processing module is configured to segment a character string according to a font of characters from a first character of the character string, calculate a character width of each segment by using the font library, obtain the width of the character string by adding up the character width of the each segment, and display the character string according to the obtained width.

In the method and device for improving page rendering speed of a browser provided by the present invention, the initial state of the rendering operation is set. The character string is segmented according to the font of the characters from the first character of the character string. The character width of each segment is calculated by using the font library. And, the width of the character string is obtained by adding up the character width of each segment; and the character string is displayed according to the obtained width. Hence, in the present invention the interface function does not need to be called repeatedly if there are continuous unequal-width characters with the same font, but only needs to be called for once. Thus, the number of calling the interface function of the font library to calculate the character width can be reduced, the resource overhead caused thereby can be reduced, and the efficiency of calculating the character width can be improved.

Further, the present invention can create unknown font in the font library, the width of the character of the created font can be directly called when the font appears again. Thus, the page rendering speed also can be accelerated, and the user experience can be improved.

### Brief Description of the Drawings

Fig. 1 shows a flow diagram of a method for improving page rendering speed of a browser of the present invention; and
Fig. 2 shows a structural diagram of a device for improving page rendering speed of a browser of the present invention.

### Detailed Description of the Embodiments

The main idea of the present invention includes: setting the initial state of the rendering operation; segmenting the character string according to the font of the characters from the first character of the character string, and calculating the character width of each segment by using the font library; obtaining the width of the character string by adding up the character width of each segment; and displaying the character string according to the obtained width.

The technical solution of the present invention is further described in detail hereinafter with reference to the drawings and the embodiments.

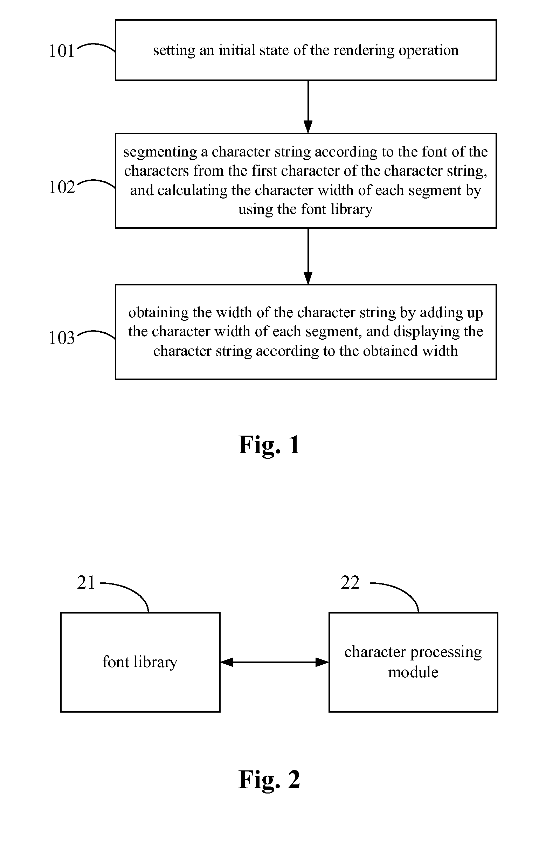

Fig. 1 shows a flow diagram of a method for improving page rendering speed of a browser of the present invention. As shown in Fig. 1, the method includes the following steps.

Step 101, setting the initial state of the rendering operation.

Specifically, the step of setting the initial state of the rendering operation includes: initializing the width of the character of each font which is stored in the font library, and initializing the interface function corresponding to each unequal-width font in the font library. The interface function is configured to calculate the width of the character of each unequal-width font.

Step 102, segmenting the character string according to the font of the characters from the first character of the character string, and calculating the character width of each segment by using the font library.

Specifically, segmenting the character string according to the font of the characters includes that: each of the characters is read sequentially; if the font of the read character(s) is unchanged, it represents that the read character(s) has(have) the same font, and belongs(belong) to the same segment; and if the font of the read character(s) is changed, it represents that the read character(s) has(have) a different font from the font of the former character, and belongs(belong) to the next segment, until the last character of the character string is read.

Calculating the character width of each segment by using the font library includes: judging whether the font of the characters of each segment is the monospaced font; if yes, obtaining the maximum width value of the font from the font library, and calculating the character width by performing accumulation according to the number of the characters; and if no, calling the interface function corresponding to the font in the font library to calculate the character width.

Further, during the process of calling the interface function of the font library, if no interface function of the font is found, it represents that the processed font does not exist in the font library, and is an unknown font. In this case, the font is created in the font library. The width value of the character of the font is determined according to the information carried by the font itself, such as font isolation, whether to set font-weight and the like. Then, the width value of the character of the font is stored in the font library. Thus, the width value of the font can be directly called when the unknown font appears again.

Further, segmenting the character string according to the font of the character, and calculating the character width of each segment by using the font library further includes: after integrally and completely reading the character string, uniformly calculating the character width of each segment according to the font of the characters of each segment and the classification of the font; or, during the process of reading the character string, calculating the character width of the former segment when the font of the characters is changed.

Step 103, obtaining the width of the character string by adding up the character width of each segment, and displaying the character string according to the obtained width.

Further, after step 103, the method can include: judging whether there is new character string to be calculated; if yes, implementing step 102; and if no, ending the processing flow.

Compared with the related art, the present invention has much higher efficiency of calculating the character width, especially during the page rendering process of the browser of the mobile terminal for frequently processing a large amount of mixed characters. Suppose that: the width of the widest character of the unknown monospaced font is iMaxWidth. It only needs to be calculated for once when being created, the iMaxWidth value can be directly taken each time it is needed to obtain the font width hereafter, and the time cost is almost 0ms. Although it is necessary to call the interface function of the font library to calculate the character width when the unequal-width font appears, the time cost of calling the interface function is between several milliseconds and tens of milliseconds. The time for calling the interface function for each character can be saved via segmental calculation.

Table 1 shows the time of opening the page from beginning to end by using the method provided by the present invention. In this case, the sequence numbers 1 to 5 represent continuously opening the website www.21dnn.com for five times on the basis that all other conditions are the same. The data before and after using the present invention is the time of opening the page, which takes second as the unit.

**Table 1**

| Sequence number | Before using the present invention | After using the present invention |
|---|---|---|
| 1 | 61 | 41 |
| 2 | 47 | 31 |
| 3 | 51 | 29 |
| 4 | 36 | 27 |
| 5 | 34 | 28 |

From Table 1, it can be seen that the browser performance is improved. And via testing different pages, it can be known that the smaller the number of the character string of the page is, the lower the improvement degree of the rendering speed is. The larger the number and complexity of the character string of the page is, the higher the improvement degree of the rendering speed is. The speed of opening the page by the browser of the mobile terminal is obviously improved after using the method provided by the present invention, and the user experience is improved.

Fig. 2 shows a structural diagram of a device for improving page rendering speed of a browser of the present invention. As shown in Fig. 2, the device includes: a font library 21 and a character processing module 22.

The font library 21 is configured to accept the setting for the initial state of the rendering operation.

Specifically, that the font library 21 accepts the setting for the initial state of the rendering operation includes: initializing the character width of each type of the fonts which are stored in the font library 21 and initializing the interface function which is corresponding to each type of the unequal-width fonts in the font library 21, wherein the interface function is configured to calculate the character width of each type of the unequal-width fonts.

The character processing module 22 is configured to segment the character string according to the font of the characters from the first character of the character string, calculate the character width of each segment by using the font library 21, obtain the width of the character string by adding up the character width of each segment, and display the character string according to the obtained width.

Specifically, that the character processing module 22 segments the character string according to the font of the character includes: sequentially reading the characters; if the font of the read character(s) is unchanged, the read character(s) being the same font and belonging to the same segment; and if the font of the read character(s) is changed, the read character(s) being a different font and belonging to the next segment, until the last character of the character string is read.

That the character processing module 22 uses the font library 21 to calculate the character width of each segment includes: judging whether the font of the characters of each segment is the monospaced font; if yes, obtaining the maximum width value of the font from the font library 21, and calculating the character width by performing accumulation according to the number of the characters; and if no, calling the interface function corresponding to the font in the font library 21 to calculate the character width.

Further, during the process that the character processing module 22 calls the interface function of the font library 21, if no interface function of the font is found, it represents that the processed font does not exist in the font library and is an unknown font. In this case, the font needs to be created in the font library 21. The width value of the character of the fond is determined according to the information carried by the font itself, such as font isolation, whether to set font-weight and the like. Then, the width value of the character of the fond is stored in the font library 21. Thus, the width value of the font can be directly called when the unknown font appears again.

Further, the step that the character processing module 22 segments the character string according to the font of the characters, and calculates the character width by using the font library 21 further includes: after integrally and completely reading the character string, uniformly calculating the character width of each segment according to the font of the characters of each segment and the classification of the font; or, during the process of reading the character string, calculating the character width of the former segment when the font of the characters is changed.

Further, the character processing module 22 is further configured to judge whether there is new character string to be calculated; if yes, restart to segment and calculate the character string from the first character; and if no, stop the operation.

The above is only the preferred embodiments of the present invention and is not intended to limit the scope of protection of the present invention. Any modifications, equivalent replacements, improvements within the principle of the invention shall fall within the scope of protection of the present invention.

## Claims

1. A method for improving page rendering speed of a browser, **characterized by** comprising:
setting an initial state of a rendering operation;
segmenting a character string according to a font of characters from a first character of the character string, and calculating a character width of each segment by using a font library; and
obtaining a width of the character string by adding up the character width of the each segment, and displaying the character string according to the obtained width.

2. The method according to claim 1, **characterized in that** calculating the character width of the each segment by using the font library comprises: judging whether the font of the characters of the each segment is a monospaced font; if yes, obtaining the maximum width value of the font from the font library, and calculating the character width by performing accumulation according to the number of the characters; and if no, calling an interface function of the font in the font library to calculate the character width.

3. The method according to claim 2, **characterized in that** during the process of calling the interface function of the font library, the method further comprises: if no interface function of the font is found, creating the font in the font library, determining a value of the width of the character of the font, and storing the value of the width of the character of the font in the font library.

4. The method according to claim 1 or 2, **characterized in that** segmenting the character string according to the font of the characters comprises: sequentially reading each of the characters; if the font of the read character(s) is unchanged, the read character(s) belonging to a same segment; and if the font of the read character(s) is changed, the read character(s) belonging to a next segment, until a last character of the character string is read.

5. The method according to claim 1 or 2, **characterized in that** setting the initial state of the rendering operation comprises: initializing the font library and an interface function corresponding to each type of the font in the font library.

6. The method according to claim 1 or 2, **characterized in that** segmenting the character string according to the font of the characters, and calculating the character width of the each segment by using the font library comprises: after integrally and completely reading the character string, uniformly calculating the character width of the each segment according to the font of the characters of the each segment and classification of the font; or, during the process of reading the character string, calculating the character width of a former segment when the font of the characters is changed.

7. A device for improving page rendering speed of a browser, **characterized by** comprising a font library and a character processing module, wherein
the font library is configured to accept a setting for an initial state of a rendering operation; and
the font processing module is configured to segment a character string according to a font of characters from a first character of the character string, calculate a character width of each segment by using the font library, obtain the width of the character string by adding up the character width of the each segment, and display the character string according to the obtained width.

8. The device according to claim 7, **characterized in that** the character processing module uses the font library to calculate the character width of the each segment comprises: judging whether the font of the characters of the each segment is a monospaced font; if yes, obtaining the maximum width value of the font from the font library, and calculating the character width by performing accumulation according to the number of the characters; and if no, calling an interface function of the font in the font library to calculate the character width.

9. The device according to claim 8, **characterized in that** the character processing module calls the interface function of the font library further comprises: if no interface function of the font is found, creating the font in the font library, determining a value of the width of the character of the font, and storing the value of the width of the character of the font in the font library.

10. The device according to claim 7 or 8, **characterized in that** the character processing module segments the character string according to the font of the characters comprises: sequentially reading each of the characters; if the font of the read character(s) is unchanged, the read character(s) belonging to a same segment; and if the font of the read character(s) is changed, the read character(s) belonging to a next segment, until a last character of the character string is read.
